# EUROPÄISCHE PATENTANMELDUNG

(11) **EP 2 610 090 A2**
(43) Veröffentlichungstag der Anmeldung: **03.07.2013**
(21) Anmeldenummer: 12197155.0
(22) Anmeldetag: 14.12.2012
(51) Int. Cl.: B60G 17/02, B60G 17/027

(54) **Federbein eines Kraftfahrzeugs**

(30) Priorität: 29.12.2011 DE 102011090089
(71) Anmelder: ROBERT BOSCH GMBH, 70442 Stuttgart (DE)
(72) Erfinder: Durix, Lucas, 67410 Drusenheim (FR)

(57) **Zusammenfassung**

Die Erfindung betrifft ein Federbein (1) eines Kraftfahrzeugs, mit wenigstens einem Federelement (2) und einem Dämpfer (3), der über einen Dämpferkolben und einen den Dämpferkolben wenigstens bereichsweise aufnehmenden Dämpferzylinder verfügt, wobei das Federelement (2) einerseits an einer ersten Koppelstelle (8) mit einer mit dem Dämpferkolben verbundenen Kolbenstange (4) und andererseits an einer zweiten Koppelstelle mit dem Dämpferzylinder gekoppelt ist. Dabei ist vorgesehen, dass die erste Koppelstelle (8) an einem Federteller (6) vorliegt, der mittels einer Stelleinrichtung (9) bezüglich des Dämpferkolbens verlagerbar ist.

## Beschreibung

### Stand der Technik

Die Erfindung betrifft ein Federbein eines Kraftfahrzeugs, mit wenigstens einem Federelement und einem Dämpfer, der über einen Dämpferkolben und einen den Dämpferkolben wenigstens bereichsweise aufnehmenden Dämpferzylinder verfügt, wobei das Federelement einerseits an einer ersten Koppelstelle mit einer mit dem Dämpferkolben verbundenen Kolbenstange und andererseits an einer zweiten Koppelstelle mit dem Dämpferzylinder gekoppelt ist.

Das Federbein der eingangs genannten Art ist aus dem Stand der Technik bekannt. Es ist dem Kraftfahrzeug zugeordnet und sorgt mittels des Federelements für eine ausreichende Federung einer Karosserie beziehungsweise eines Kraftfahrzeugaufbaus des Kraftfahrzeugs gegenüber einem Fahrwerk des Kraftfahrzeugs und damit einem Untergrund, auf welchem sich das Kraftfahrzeug fortbewegt. Gleichzeitig verzögert der Dämpfer die Bewegung des Federelements, so dass Schwingungen zwischen der ersten Koppelstelle und der zweiten Koppelstelle gedämpft werden. Der Dämpfer ist insoweit ein Stoßdämpfer beziehungsweise Schwingungsdämpfer. Üblicherweise ist jedem Rad des Kraftfahrzeugs ein derartiges Federbein zugeordnet, wobei über das Federbein die Kraftübertragung zwischen dem Rad und der Karosserie beziehungsweise dem Kraftfahrzeugaufbau des Kraftfahrzeugs erfolgt.

Der Dämpfer besteht aus dem Dämpferkolben und dem Dämpferzylinder. Der Dämpferkolben ist in einer Dämpferkammer des Dämpferzylinders angeordnet, welche beispielsweise mit einem Fluid gefüllt ist. Bei einer Bewegung des Dämpferkolbens in dem Dämpferzylinder muss nun das Fluid durch Fluidführungsausnehmungen von einer Seite des Dämpferkolbens auf seine andere Seite strömen, wodurch - bedingt durch den Durchflusswiderstand - der Dämpferkolben verzögert und die gewünschte Dämpfungswirkung erzielt wird. Mit dem Dämpferkolben ist die Koppelstange starr verbunden. Das Federelement greift an der ersten Koppelstelle an dieser Kolbenstange an, wobei die erste Koppelstelle auf der dem Dämpferzylinder abgewandten Seite der Kolbenstange vorliegt. Auf seiner anderen Seite ist das Federelement an der zweiten Koppelstelle mit dem Dämpferzylinder verbunden beziehungsweise mit diesem gekoppelt.

Üblicherweise sind derartige Federbeine passive Elemente. Es sind jedoch auch aktive Federbeine bekannt. Letztere ermöglichen es, die Dämpfung des Dämpfers und/oder die Höhe des Fahrwerks, also insbesondere die Länge des Federbeins, zu verstellen. Das Einstellen der Dämpfung erfolgt üblicherweise durch die Änderung des Durchflusswiderstands der Fluidführungsausnehmungen, welche das Hydraulikfluid bei einer Verlagerung des Dämpferkolbens durchströmt, wozu beispielsweise wenigstens ein Ventil verwendet wird. Die Niveauregelung, also das Einstellen der Höhe des Fahrwerks, kann durch die Anpassung der Federeigenschaften des Federelements vorgesehen sein. Zu diesem Zweck ist das Federelement häufig als Luftfeder ausgebildet. Zum Betreiben des Federelements und damit des Federbeins ist unter hohem Druck stehendes Gas notwendig, wobei üblicherweise Stickstoff zum Einsatz kommt. Das unter hohem Druck stehende Gas wird dabei von einer Hochdruckquelle bereitgestellt und beispielsweise über wenigstens ein Ventil dem Federelement beziehungsweise der Luftfeder zugeführt. Bei einem Ausfall der Hochdruckquelle entfällt die Federkraft des Federelements, so dass das Federbein durch das Gewicht des Kraftfahrzeugs beziehungsweise des Kraftfahrzeugaufbaus auf seine minimale Länge zusammengeschoben wird. Entsprechend kann das Kraftfahrzeug nicht oder nur unter starken Einschränkungen weiter betrieben werden.

### Offenbarung der Erfindung

Demgegenüber weist das Federbein mit den in Anspruch 1 genannten Merkmalen den Vorteil auf, dass die Verstellung der Höhe des Fahrwerks mit Hilfe eines einfacheren Aufbaus erzielt wird, der sehr zuverlässig arbeitet. Insbesondere ist auch bei einem Defekt des Federbeins ein weitestgehend problemloses Weiterbetreiben des Kraftfahrzeugs üblicherweise möglich. Dies wird erfindungsgemäß erreicht, indem die erste Koppelstelle an einem Federteller vorliegt, der mittels einer Stelleinrichtung bezüglich des Dämpferkolbens verlagerbar ist. Die Stelleinrichtung ist also insbesondere dazu vorgesehen, den Abstand zwischen dem Dämpferkolben und ersten Koppelstelle einzustellen. Zu diesem Zweck wird der Federteller mittels der Stelleinrichtung bezüglich des Dämpferkolbens beziehungsweise der Kolbenstange verlagert. An dem Federteller liegt das Federelement mit seinem dem Dämpferkolben abgewandten Ende an. Der Federteller und das Federelement treffen somit an der ersten Koppelstelle aufeinander beziehungsweise bilden diese gemeinsam aus. Der Federteller ist an dem Dämpferkolben gelagert und an diesem befestigt. Die Lagerung lässt jedoch die Verlagerung des Federtellers mittels der Stelleinrichtung bezüglich des Dämpferkolbens zu. Das Verlagern des Federtellers ist dabei vorzugsweise entlang einer Längsache des Dämpferkolbens vorgesehen. Üblicherweise ist die Kolbenstange nun dem Kraftfahrzeugaufbau und der Dämpferzylinder dem Fahrwerk des Kraftfahrzeugs zugeordnet beziehungsweise bezüglich des jeweiligen Elements nicht verlagerbar befestigt.

Eine Weiterbildung der Erfindung sieht vor, dass der Federteller in Umfangsrichtung - bezüglich einer Längsachse des Dämpferkolbens - festgesetzt ist und ein Innengewinde aufweist, das in ein Außengewinde eines drehbar gelagerten Stellelements der Stelleinrichtung eingreift, wobei das Innengewinde und das Außengewinde ein, insbesondere selbsthemmendes, Koppelgetriebe bilden. In einer ersten Ausführungsform ist es also vorgesehen, den Federteller durch eine Drehbewegung des drehbar gelagerten Stellelements linear zu verlagern. Insoweit ist beispielsweise eine elektrische Stelleinrichtung realisierbar, welche ein mit dem Stellelement wirkverbundenes Stellglied, insbesondere einen Elektromotor, aufweist, mittels welchem die Drehbewegung des Stellelements auf Wunsch bewirkt werden kann. Das Stellelement ist ausschließlich drehbar gelagert, also in axialer Richtung des Dämpferkolbens bezüglich diesem festgesetzt. Der Federteller ist dagegen in Umfangsrichtung festgelegt, ist also nur in axialer Richtung verlagerbar.

Das Stellelement ist über das Koppelgetriebe mit dem Federteller wirkverbunden, wobei ein erstes Gewinde, insbesondere des Außengewinde, des Stellelements mit einem zweiten Gewinde, insbesondere dem Innengewinde, des Federtellers in Eingriff steht. Besonders bevorzugt ist das Koppelgetriebe selbsthemmend, so dass zwar eine Drehbewegung des Stellelements eine Verlagerung des Federtellers in axialer Richtung bewirkt, umgekehrt jedoch eine auf den Federteller in axialer Richtung wirkende Kraft keine Drehbewegung des Stellelements bewirkt. Somit kann mit dem hier vorgestellten Federbein ein Fahrbetrieb des Kraftfahrzeugs auch dann sichergestellt werden, wenn die Stelleinrichtung defekt ist, weil die Gewichtskraft des Kraftfahrzeugs beziehungsweise des Kraftfahrzeugaufbaus keine Komprimierung des Federbeins bewirken kann, weil die Federkraft des Federelements auch in diesem Fall nicht entfällt. Es ist lediglich für dieses Federbein kein Einstellen der Federkraft auf eine gewünschte Federkraft mehr möglich.

Eine Weiterbildung der Erfindung sieht vor, dass zwischen dem Federteller und einem Gegenelement ein Fluidraum vorgesehen ist, dem über eine Fluidleitung Fluid zuführbar und entnehmbar ist. In einer zweiten Ausführungsform ist also eine hydraulische oder pneumatische Betätigung der Stelleinrichtung vorgesehen. Zu diesem Zweck liegt der Fluidraum vor, dem das Fluid, also beispielsweise Hydrauliköl (Hydraulik) oder Luft (Pneumatik), bei Bedarf zuführbar beziehungsweise entnehmbar ist. Das Gegenelement ist zum Beispiel ortsfest an der Kolbenstange befestigt, also dieser gegenüber unbeweglich. Der Federteller ist, wie bereits vorstehend ausgeführt, bezüglich des Dämpferkolbens in axialer Richtung verlagerbar. Das Gegenelement ist dabei auf der dem Dämpferzylinder abgewandten Seite des Federtellers angebracht. Somit wird durch ein Zuführen des Fluids in den Fluidraum eine Verlagerung des Federtellers auf den Dämpferkolben zu und bei einem Entnehmen des Fluid eine Verlagerung von diesem fort bewirkt. Auf diese Weise ist durch entsprechende Wahl der in dem Fluidraum vorliegenden Fluidmenge die Höhe des Kraftfahrzeugs beziehungsweise die Position der ersten Koppelstelle bezüglich des Dämpferkolbens einstellbar.

Eine Weiterbildung der Erfindung sieht vor, dass die Fluidleitung auf ihrer dem Fluidraum gewandten Seite an eine Stellkammer einer Stelleinrichtung angeschlossen ist, in der ein verlagerbarer Stellkolben angeordnet ist. Dem Fluidraum ist über die Fluidleitung das Fluid zuführbar und entnehmbar. Zur Durchführung des Zuführens und des Entnehmens ist die Fluidleitung mit ihrer anderen Seite an die Stellkammer der Stelleinrichtung angeschlossen. In der Stellkammer ist der Stellkolben verlagerbar gelagert. Bei einer Verlagerung des Stellkolbens wird entsprechend Fluid durch die Fluidleitung zu dem Fluidraum gedrängt oder kann in umgekehrte Richtung wieder in die Stellkammer hineinströmen.

Eine Weiterbildung der Erfindung sieht vor, dass in der Fluidleitung ein Querschnittsverengungselement oder ein Querschnittverstellelement vorliegt. Das Querschnittsverengungselement bewirkt eine Verengung des Querschnitts der Fluidleitung. Es weist demnach einen Durchströmungsquerschnitt auf, welcher geringer ist als der Durchströmungsquerschnitt der Fluidleitung. Das Querschnittsverengungselement wirkt demnach als Drossel für das Fluid. Das Querschnittsverengungselement ist nicht verstellbar, sein Durchströmungsquerschnitt bleibt also konstant. Das Querschnittsverstellelement dagegen erlaubt das Einstellen seines Durchströmungsquerschnitts über einen bestimmten Bereich. An dem Querschnittsverstellelement könne insoweit wenigstens zwei verschiedene Durchströmungsquerschnitte eingestellt werden.

Beispielsweise entspricht einer der Durchströmungsquerschnitte dem Durchströmungsquerschnitt der Fluidleitung, so dass diese vollständig freigegeben ist, das Querschnittsverstellelement also keine Drosselwirkung auf das Fluid hat. Ein weiterer der Querschnitte ist dagegen kleiner, so dass eine wenigstens teilweise Versperrung der Fluidleitung bewirkt wird. Es kann auch vorgesehen sein, dass mittels des Querschnittsverstellelements die Fluidleitung vollständig versperrt werden kann. Das Querschnittsverstellelement liegt beispielsweise als Ventil vor, welches stromlos geschlossen ist, ohne Bestromung also die Fluidleitung vollständig versperrt. Auf diese Weise wird trotz eines Defekts der Stelleinrichtung ein Halten des Federtellers in seiner momentanen Position bezüglich des Dämpferkolbens realisiert, so dass auch bei Auftreten des Defekts ein zuverlässiger Fahrbetrieb des Kraftfahrzeugs sichergestellt ist. Beispielsweise kann das Querschnittsverstellelement auch als Rückschlagventil vorliegen oder ein solches zusätzlich zu dem Querschnittverstellelement vorgesehen sein.

Eine Weiterbildung der Erfindung sieht eine Antriebseinrichtung zum Antreiben des Stellelements oder zum Verlagern des Stellkolbens vor. Die Antriebseinrichtung ist dabei bevorzugt eine elektrische Antriebseinrichtung, weist also zumindest ein Stellglied, insbesondere einen Elektromotor auf. Auch hier ist also kein Hochdruckfördermittel, welches bei anderen Ausführungsformen des Federbeins üblich ist, notwendig.

Eine Weiterbildung der Erfindung sieht vor, dass das Stellelement oder der Stellkolben mittels der Antriebseinrichtung über ein Getriebe, insbesondere ein Schneckengetriebe, antreibbar beziehungsweise verlagerbar ist. Um eine Verstellung des Federtellers oder eine Verlagerung des Stellkolbens mit einem möglichst geringen Drehmoment und mit einer entsprechend kleinen Antriebseinrichtung zu realisieren, ist das Getriebe vorgesehen. Dieses bewirkt bevorzugt eine Untersetzung der Drehzahl der Antriebseinrichtung, so dass eine hohe Drehzahl der Antriebseinrichtung in eine niedrige Drehzahl des Stellelements umgesetzt wird. Entsprechend wird das Drehmoment der Antriebseinrichtung in ein größeres, auf das Stellelement wirkendes Drehmoment umgesetzt. Das Getriebe kann beispielsweise als Schneckengetriebe ausgebildet sein, weil mit einem solchen bei geringem Raumbedarf ein hohes Übersetzungsbeziehungsweise Untersetzungsverhältnis erzielbar ist.

Eine Weiterbildung der Erfindung sieht vor, dass das Getriebe selbsthemmend ist. Auf die Vorteile eines selbsthemmenden Getriebes wurde bereits vorstehend eingegangen. Durch eine derartige Ausgestaltung des Getriebes wird verhindert, dass bei einem Defekt der Antriebseinrichtung der Federteller verlagert wird. Auch bei einem Defekt der Antriebseinrichtung kann insoweit der zuverlässige Fahrbetrieb des Kraftfahrzeugs sichergestellt werden.

Eine Weiterbildung der Erfindung sieht vor, dass dem Stellelement ein Schneckenrad des Schneckengetriebes und der Antriebseinrichtung eine Schnecke des Schneckengetriebes zugeordnet ist. Das Schneckengetriebe setzt sich aus dem Schneckenrad und der Schnecke zusammen. Besonders bevorzugt soll nun dem Stellelement das Schneckenrad und der Antriebseinrichtung die Schnecke zugeordnet sein, weil auf diese Weise das Getriebe auf einfache Art und Weise selbsthemmend ausgebildet sein kann. Auf die Vorteile einer derartigen Ausführungsform wurde bereits vorstehend eingegangen.

Eine Weiterbildung der Erfindung sieht vor, dass die Antriebseinrichtung ein elektrisches Stellglied und/oder ein integriertes Steuergerät zur Ansteuerung des Stellglieds aufweist. Das elektrische Stellglied ist beispielsweise der bereits vorstehend erwähnte Elektromotor. Mit Hilfe des Stellglieds wird das Stellelement angetrieben beziehungsweise der Stellkolben verlagert. Zur Ansteuerung des Stellglieds ist das Steuergerät vorgesehen. Dieses ist in die Antriebseinrichtung des Federbeins integriert. Es ist somit kein weiteres Steuergerät notwendig, um die Position beziehungsweise die Last auf das Federbein beziehungsweise den Dämpfer zu erfassen und die Sollpositionen für ein oder mehrere Dämpfer des Kraftfahrzeugs zu berechnen. Das integrierte Steuergerät ist beispielsweise an einen CAN-Bus angeschlossen. Auf dies Weise kann dem Steuergerät über den CAN-Bus ein Vorgabewert mitgeteilt werden, worauf das Steuergerät aus diesem Vorgabewert eine Sollposition des Federtellers bestimmt und mit Hilfe des elektrischen Stellglieds steuernd und/oder regelnd einstellt.

Zu diesem Zweck kann dem Dämpfer wenigstens ein Positionssensor zugeordnet sein. Beispielsweise ist dieser Positionssensor ebenfalls an den CAN-Bus angeschlossen. Alternativ kann er jedoch auch unmittelbar mit dem integrierten Steuergerät kommunizieren. Beispielsweise wird jedem Federbein beziehungsweise dem in dieses integrierte Steuergerät der Vorgabewert zur Verfügung gestellt, beispielsweise über den CAN-Bus. Der Vorgabewert wird beispielsweise von einem Fahrer des Kraftfahrzeugs oder einer Fahrerassistenzeinrichtung vorgegeben. Aus diesem Vorgabewert bestimmt das Steuergerät nun die Sollposition des Federtellers bezüglich des Dämpferkolbens. Die Ansteuerung des Stellglieds kann von dem Steuergerät auf Grundlage dieser Sollposition und eventuell zusätzlich mit Hilfe einer Istposition des Dämpfers vorgenommen werden, wobei die Istposition von dem Positionssensor bestimmt wird.

Die Erfindung wird nachfolgend anhand der in der Zeichnung dargestellten Ausführungsbeispiele näher erläutert, ohne dass eine Beschränkung der Erfindung erfolgt. Dabei zeigen:
- Figur 1: einen Längsschnitt durch ein Federbein in einer ersten Ausführungsform, und
- Figur 2: einen Längsschnitt durch das Federbein in einer zweiten Ausführungsform sowie eine schematische Darstellung eines Bereichs einer Stelleinrichtung.

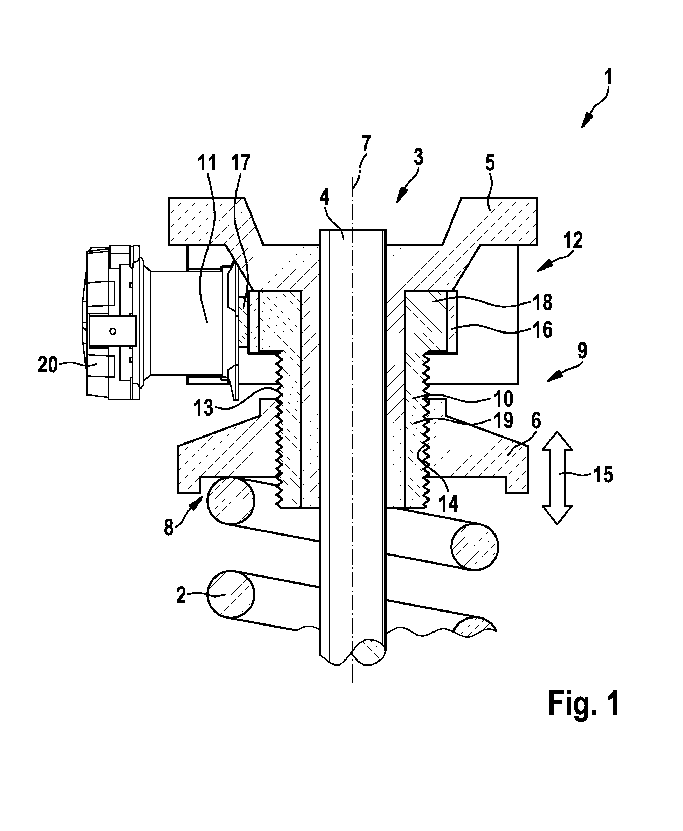

Die Figur 1 zeigt einen Längsschnitt durch einen Bereich eines Federbeins 1 eines Kraftfahrzeugs. Das Federbein verfügt über ein Federelement 2, welches hier lediglich abschnittsweise dargestellt ist. Zudem weist es einen Dämpfer 3 auf, von welchem hier lediglich ein Teil einer Kolbenstange 4 dargestellt ist. Die Kolbenstange 4 ist auf ihrer einen Seite mit einem Träger 5 fest verbunden. Auf ihrer dem Träger 5 abgewandten Seite liegt an der Kolbenstange 4 ein hier nicht gezeigter Dämpferkolben vor, welcher in einem Dämpferzylinder verlagerbar angeordnet ist. Die Kolbenstange 4 ist mit dem Dämpferkolben starr verbunden. Der Dämpfer 3 ist insoweit ein Stoßdämpfer bekannter Art. Das Federelement liegt mit seinem einen Ende auf einem Federteller 6 auf. Mit seinem dem Federteller 6 gegenüberliegenden Ende stützt es sich an dem Dämpferzylinder beziehungsweise einem bezüglich diesem ortsfesten Stützelement ab. Es ist also nicht notwendig, dass das Federelement 2 unmittelbar mit dem Dämpferzylinder in Berührkontakt steht. Das entsprechende Ende des Federelements 2 ist jedoch bezüglich des Dämpferzylinders in axialer Richtung festgesetzt. Unter der axialen Richtung ist dabei eine mit einer Längsachse 7 der Kolbenstange 4 oder zu dieser parallelen Richtung gemeint.

An dem Federteller 6 liegt eine erste Koppelstelle 8 vor, an welcher das Federelement 2 mit dem Dämpferkolben beziehungsweise der Kolbenstange gekoppelt ist beziehungsweise auf dem Federteller 6 aufliegt. Eine hier nicht dargestellte zweite Koppelstelle liegt auf der der ersten Koppelstelle 8 abgewandten Seite des Federelements 2 vor. Diese ist ortsfest bezüglich des Dämpferzylinders. An der zweiten Koppelstelle ist das Federelement 2 mit dem Dämpferkolben gekoppelt, wobei wie vorstehend ausgeführt diese Koppelung unmittelbar oder mittelbar über das Stützelement vorgesehen sein kann. Der Federteller 6 ist bezüglich der Kolbenstange 4 in axialer Richtung, also entlang der Längsachse 7, verlagerbar. Zum Verstellen des Federtellers 6 ist eine Stelleinrichtung 9 vorgesehen. Diese besteht insbesondere aus einem Stellelement 10, einer Antriebseinrichtung 11 und einem Getriebe 12. Das Stellelement 10 ist bezüglich der Kolbenstange 4 in axialer Richtung festgesetzt, jedoch drehbeweglich an dieser gelagert. Zu diesem Zweck stützt es sich beispielsweise an dem Träger 5 ab und umgibt diesen zumindest bereichsweise. An dem Träger 5 ist insoweit ein Lager für das Stellelement 10 vorgesehen. Das Stellelement 10 weist ein Außengewinde 13 auf, welches in Eingriff mit einem Innengewinde 14 des Federtellers 6 steht. Der Federteller 6 umgreift das Stellelement 10 in Umfangsrichtung derart, dass ein Innengewinde 14 mit dem Außengewinde 13 zusammenwirkt, also mit diesem in Eingriff steht. Der Federteller 6 ist dabei in Umfangsrichtung festgelegt, ist also nur in axialer Richtung verlagerbar, wie durch den Pfeil 15 angedeutet.

Über das Getriebe 12 ist eine Wirkverbindung zwischen der Antriebseinrichtung 11 und dem Stellelement 10 hergestellt. Es ist beispielsweise als Schneckengetriebe ausgebildet, wobei ein Schneckenrad 16 des Getriebes 12 an dem Stellelement 10 und eine Schnecke 17 an der Antriebseinrichtung 11 vorgesehen ist. Das Schneckenrad 16 steht nun derart mit der Schnecke 17 in Eingriff, dass mittels der Antriebseinrichtung 11 das Stellelement 10 bezüglich der Längsachse 7 in Drehbewegung versetzt werden kann. Das Schneckenrad 16 liegt beispielsweise an einem Ringelement 18 des Stellelements 10 vor, welches einen größeren Durchmesser aufweist als ein Grundkörper 19 des Stellelements 10, an welchem das Außengewinde 13 vorgesehen ist. Das Außengewinde 13 weist eine prinzipiell beliebige Erstreckung in axialer Richtung auf. Bevorzugt ist diese Erstreckung größer als die axiale Erstreckung des Federtellers 6 beziehungsweise dessen Innengewinde 14. Über die Erstreckung des Außengewindes 13 wird die Strecke festgelegt, über welche der Federteller 6 in axialer Richtung verlagerbar ist.

Mit Hilfe der hier vorgestellten Stelleinrichtung 9 ist ein Federbein 1 realisiert, bei welchem der Federteller 6 in axialer Richtung bezüglich des Dämpferkolbens beziehungsweise der Kolbenstange 4 verlagerbar ist. Entsprechend kann das Niveau des Kraftfahrzeugs bei gegebener Belastung des Federbeins 1 eingestellt werden. Beispielsweise ist es vorgesehen, das Niveau des Kraftfahrzeugs bei unterschiedlichen Belastungen zumindest näherungsweise konstant zu halten. Die Ansteuerung eines hier nicht dargestellten elektrischen Stellglieds in der Antriebseinrichtung 11, welches beispielsweise als Elektromotor vorliegt, erfolgt mit Hilfe eines Steuergeräts 20, welches an dem Federbein 1 integriert ist. Das Steuergerät 20 ist dabei beispielsweise an einen CAN-Bus des Kraftfahrzeugs angeschlossen. Zusätzlich kann dem Dämpfer 3 ein Positionssensor (nicht dargestellt) zugeordnet sein, mittels welchem die Istposition des Dämpferkolbens beziehungsweise der Kolbenstange 4 bezüglich des Dämpferzylinders bestimmbar ist. Dem Steuergerät 20 wird nun beispielsweise ein Vorgabewert übermittelt, welche von einem Fahrer des Kraftfahrzeugs oder einer Fahrerassistenzeinrichtung vorgegeben wird. Aus dieser Vorgabegröße wird eine Sollposition des Federtellers 6 bestimmt und mit Hilfe des elektrischen Stellglieds eingestellt. Dies kann steuernd oder unter Verwendung der Istposition auch regelnd erfolgen.

Alternativ kann die Berechnung der Sollposition selbstverständlich auch in einem Steuergerät der Fahrerassistenzeinrichtung, insbesondere einer ESP-Fahrerassistenzeinrichtung, durchgeführt werden. In diesem Fall wird die Sollposition nachfolgend beispielsweise über den CAN-Bus an das Steuergerät 20 des Federbeins 1 übermittelt.

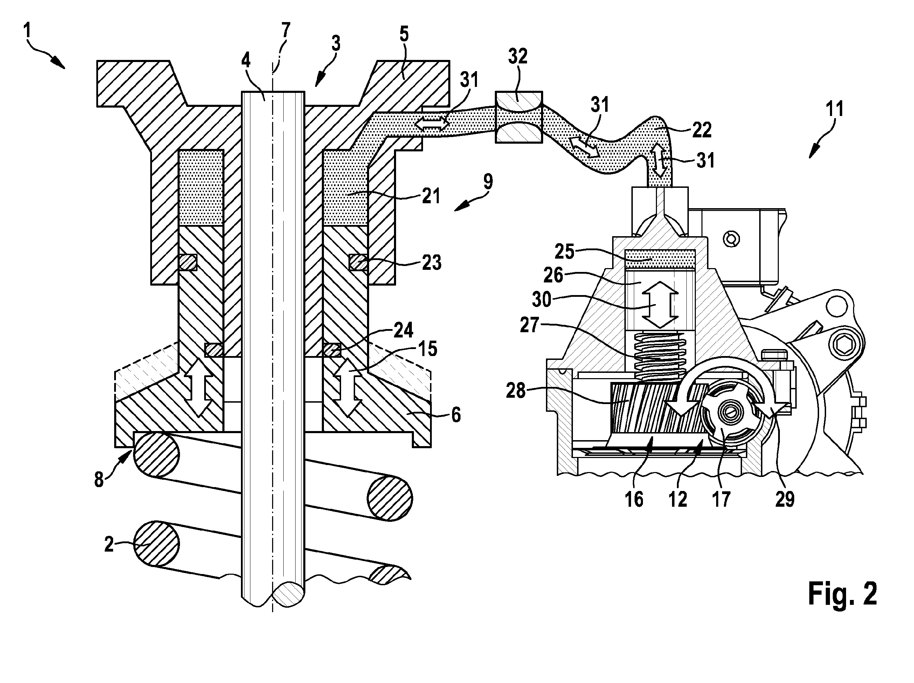

Die Figur 2 zeigt eine zweite Ausführungsform des Federbeins 1. Der grundsätzliche Aufbau ähnelt dem anhand der Figur 1 beschriebenen, so dass zunächst auf die vorstehenden Ausführungen verwiesen wird. Der Unterschied liegt darin, dass die Verstellung des Federtellers 6 nicht durch das Stellelement 10 beziehungsweise das Zusammenwirken des Außengewindes 13 und des Innengewindes 14 erzielt ist. Vielmehr ist in dem Träger 5 ein Fluidraum 21 vorgesehen, dem über eine Fluidleitung 22 Fluid zuführbar und entnehmbar ist. Es wird insoweit eine hydraulische oder pneumatische Verstellung des Federtellers 6 realisiert. Der Fluidraum 21 ist mithilfe von Dichtungen 23 und 24 gegenüber einer Umgebung des Federbeins 1 abgedichtet. Die Dichtungen 23 und 24 liegen dabei in Radialausnehmungen des Federtellers 6 und stehen in Berührkontakt mit Innenwänden des Trägers 5.

Über die Fluidleitung 22 ist der Fluidraum 21 mit einer Stellkammer 25 der Stelleinrichtung 9 fluidverbunden. In der Stellkammer 25 ist ein Stellkolben 26 verlagerbar angeordnet, so dass das Volumen der Stellkammer 25 verkleinerbar und vergrößerbar ist. Zur Verlagerung des Stellkolbens 26 dient eine Spindel 27, deren Außengewinde mit einem Innengewinde einer Spindelmutter 28 in Eingriff steht. Über die Spindelmutter 28 ist die Spindel 27 von der Antriebseinrichtung 11 verlagerbar. Insoweit stellt die Spindelmutter 28 das Äquivalent zu dem Stellelement 10 der Figur 1 dar. Die Spindelmutter 28 ist demnach über das Getriebe 12, welches als Schneckengetriebe vorliegt, mit dem hier nicht dargestellten Stellglied wirkverbunden. An der Spindelmutter 28 legt insoweit das Schneckenrad 16 und an dem Stellglied die Schnecke 17 vor. Durch Rotation des Stellglieds und damit der Schnecke 17 gemäß dem Pfeil 29 wird eine Verlagerung des Stellkolbens 26 gemäß dem Pfeil 30 bewirkt. Entsprechend strömt das Fluid gemäß den Pfeilen 31 durch die Fluidleitung 22 entweder in den Fluidraum 21 oder in die Stellkammer 25. Auf diese Weise wird die Verlagerung des Federtellers 6 bezüglich der Kolbenstange 4 beziehungsweise des Dämpferkolbens entlang der Längsachse 7 gemäß dem Pfeil 15 erzielt. Zur Umkehrung der Bewegung wird der Stellkolben 26 entgegen dem Pfeil 30 verlagert.

Der Fluidleitung 22 ist ein Querschnittsverengungselement 32 zugeordnet, welches insoweit als Drossel dient. Das Querschnittsverengungselement 32 weist einen Durchströmungsquerschnitt auf, welcher kleiner ist als der der Fluidleitung 22. Auf diese Weise ist das Stellglied vor unter hohem Druck in die Stellkammer 25 eindringendem Fluid geschützt. Der hohe Druck des Fluids kann unter Umständen auftreten, wenn das Federbein 1 beispielsweise durch Unebenheiten des Untergrunds verursachte Stöße auffangen muss.

## Patentansprüche

1. Federbein (1) eines Kraftfahrzeugs, mit wenigstens einem Federelement (2) und einem Dämpfer (3), der über einen Dämpferkolben und einen den Dämpferkolben wenigstens bereichsweise aufnehmenden Dämpferzylinder verfügt, wobei das Federelement (2) einerseits an einer ersten Koppelstelle (8) mit einer mit dem Dämpferkolben verbundenen Kolbenstange (4) und andererseits an einer zweiten Koppelstelle mit dem Dämpferzylinder gekoppelt ist, **dadurch gekennzeichnet, dass** die erste Koppelstelle (8) an einem Federteller (6) vorliegt, der mittels einer Stelleinrichtung (9) bezüglich des Dämpferkolbens verlagerbar ist.

2. Federbein nach Anspruch 1, **dadurch gekennzeichnet, dass** der Federteller (6) in Umfangsrichtung - bezüglich einer Längsachse der Kolbenstange (4) - festgesetzt ist und ein Innengewinde (14) aufweist, das in einem Außengewinde (13) eines drehbar gelagerten Stellelements (10) der Stelleinrichtung (9) eingreift, wobei das Innengewinde und das Außengewinde ein, insbesondere selbsthemmendes, Koppelgetriebe bilden.

3. Federbein nach einem der vorhergehenden Ansprüche, **dadurch gekennzeichnet, dass** zwischen dem Federteller (6) und einem Gegenelement (5) ein Fluidraum (21) vorgesehen ist, dem über eine Fluidleitung (22) Fluid zuführbar und entnehmbar ist.

4. Federbein nach einem der vorhergehenden Ansprüche, **dadurch gekennzeichnet, dass** die Fluidleitung (22) auf ihrer dem Fluidraum (21) abgewandten Seite an eine Stellkammer (25) der Stelleinrichtung (9) angeschlossen ist, in der ein verlagerbarer Stellkolben (26) angeordnet ist.

5. Federbein nach einem der vorhergehenden Ansprüche, **dadurch gekennzeichnet, dass** in der Fluidleitung (22) ein
Querschnittsverengungselement (32) oder ein Querschnittverstellelement vorliegt.

6. Federbein nach einem der vorhergehenden Ansprüche, **gekennzeichnet durch** eine Antriebseinrichtung (11) zum Antreiben des Stellelements (10) oder zum Verlagern des Stellkolbens (26).

7. Federbein nach einem der vorhergehenden Ansprüche, **dadurch gekennzeichnet, dass** das Stellelement (10) oder der Stellkolben (26) mittels der Antriebseinrichtung (11) über ein Getriebe (12), insbesondere ein Schneckengetriebe, antreibbar beziehungsweise verlagerbar ist.

8. Federbein nach einem der vorhergehenden Ansprüche, **dadurch gekennzeichnet, dass** das Getriebe (12) selbsthemmend ist.

9. Federbein nach einem der vorhergehenden Ansprüche, **dadurch gekennzeichnet, dass** dem Stellelement (10) ein Schneckenrad (16) des Schneckengetriebes (12) und der Antriebseinrichtung (11) eine Schnecke (17) des Schneckengetriebes (12) zugeordnet ist.

10. Federbein nach einem der vorhergehenden Ansprüche, **dadurch gekennzeichnet, dass** die Antreibseinrichtung (11) ein elektrisches Stellglied und/oder ein integriertes Steuergerät (20) zur Ansteuerung des Stellglieds aufweist.
